# EUROPÄISCHE PATENTSCHRIFT

(11) **EP 2 558 660 B1**
(45) Veröffentlichungstag und Bekanntmachung des Hinweises auf die Patenterteilung: **14.05.2014**
(21) Anmeldenummer: 11715428.6
(22) Anmeldetag: 12.04.2011
(51) Int. Cl.: E04G 21/12

(54) **DRAHTBINDEGERÄT MIT POSITIONIEREINRICHTUNG**
WIRE-BINDING DEVICE WITH POSITIONING MEANS
APPAREIL DE RELIURE AU MOYEN DE FIL MÉTALLIQUE AVEC DISPOSITIF DE POSITIONNEMENT

(30) Priorität: 16.04.2010 DE 102010015218
(43) Veröffentlichungstag der Anmeldung: 20.02.2013
(73) Patentinhaber: Wacker Neuson Produktion GmbH & Co. KG, 80809 München (DE)
(72) Erfinder: SACHER, Christian, 86807 Buchloe (DE)
(74) Vertreter: Müller - Hoffmann & Partner
(86) Internationale Anmeldenummer: PCT/EP2011/001835
(87) Internationale Veröffentlichungsnummer: WO 2011/128074

(56) Entgegenhaltungen:
- EP-A1- 0 232 392
- DE-C1- 4 322 763
- DE-U1- 20 203 728
- KR-A- 20050 052 969

## Beschreibung

Die Erfindung betrifft ein Drahtbindegerät zum Zusammenbinden von wenigstens zwei Objekten mit einem Draht.

Auf Baustellen ist es vielfältig erforderlich, zwei Objekte miteinander dauerhaft fest zu verbinden. Insbesondere im Betonbau müssen Bewehrungseisen, die parallel zueinander liegen oder sich im rechten Winkel kreuzen, mit Hilfe von Drahtbindern miteinander verbunden werden. Aus dieser Tätigkeit ist die Berufsgruppe der "Eisenflechter" entstanden, die sich insbesondere durch schwere körperliche Tätigkeit auszeichnet.

Eine erhebliche Erleichterung des "Eisenflechtens" konnte durch das mechanische Bindegerät DF 16 der Firma Wacker Neuson SE erreicht werden. Bei diesem Gerät kann der Bediener aufrecht, in bequemer Arbeitshaltung stehen die Bewehrungseisen mit einem Drahtstück miteinander verbinden. Zu diesem Zweck drückt der Bediener einen Handgriff an dem Bindegerät nach unten und anschließend wieder nach oben. Beim Herabbewegen des Griffes wird ein V-förmiger Drahtbügel um die beiden zu verbindenden Bewehrungseisen herumgeführt, so dass sich die Enden der Schenkel des V-förmigen Drahtbügels schließlich miteinander verhaken können. Durch anschließendes Rückziehen des Griffs wird der Drahtbügel verdrillt, so dass schließlich die beiden Bewehrungseisen fixiert sind.

Außer dem Zusammenbinden von Bewehrungseisen ist es auch möglich, z. B. Heizungsschläuche (Fußbodenheizung) oder Lehrrohre für Elektroinstallationen an einem Bewehrungseisen zu befestigen.

Die Wirkungsweise des Bindegeräts DF 16 ist insbesondere in der EP 0 232 392 B 1 erläutert.

Das dort in den Figuren 13a bis 27 beschriebene Ausführungsbeispiel weist zwei einander gegenüberliegende, feststehende Schließbacken auf, in denen jeweils ein Führungskanal ausgebildet ist, um die Schenkel des Drahtbügels um die beiden miteinander zu verbindenden Objekte herumzuführen. Beim Drücken des Griffteils durch den Bediener wird aus einem Magazin, in dem ein Streifen von V-förmigen Drahtbügeln gelagert ist, der vorderste Drahtbügel abgezogen und mit Hilfe der Schließbacken und der dortigen Führungskanäle um die beiden miteinander zu verbindenden Objekte herumgeführt.

Der V-förmige Drahtbügel weist unterschiedlich ausgebildete Schenkel auf. Wie insbesondere auch in den Figuren 22 bis 24 der EP 0 232 392 B1 geneigt, ist einer der Schenkel schmal ausgeführt und bildet eine Öse, während der gegenüberliegende andere Schenkel eine breitere Öse bildet, in der ein Stiftfortsatz ausgebildet ist. Durch das Herumführen der beiden Schenkelenden um die zu verbindenden Objekte kann das schmalere Schenkelende in die Öse des breiteren Schenkelendes hindurchgeführt werden und sich schließlich an dem Stift verhaken.

Beim anschließenden Rückziehen des Griffteils greift ein zu dem Gerät gehörender Bindehaken an einem die beiden Schenkel des Drahtbügels verbindenden Übergangsteil ein und verdreht den Übergangsteil, wodurch der Drahtbügel verdrillt wird und die beiden zu verbindenden Objekte miteinander verspannt.

Das Bindegerät DF 16 hat sich in der Praxis hervorragend bewährt. Es hat sich jedoch auch herausgestellt, dass bei Objekten mit stark unterschiedlichem Durchmesser, also z. B. beim Binden eines Heizschlauchs mit großem Durchmesser (z. B. bis zu 26 mm) an ein Bewehrungseisen mit geringerem Durchmesser (z. B. 5 mm) die Möglichkeit besteht, dass das Objekt mit dem größeren Durchmesser die Schenkel des Drahtbügels derart ablenkt, dass die an den Schenkeln ausgebildeten Laschen bzw. Ösen nicht mehr ineinander fahren und sich nicht mehr verhaken können. Das Resultat ist eine Fehlbindung, bei der kein dauerhafter Verbund zwischen den beiden Objekten erreicht werden kann.

Dieses Problem liegt insbesondere auch daran, dass zwischen dem Objekt mit großem Durchmesser und einem der Führungskanäle in dem jeweiligen Schließbacken ein zu geringer Abstand besteht, so dass auf dieser Seite die Drahtöse nicht korrekt gebogen geführt werden kann. Das Problem tritt insbesondere auch dann auf, wenn das Drahtbindegerät nicht exakt senkrecht, sondern z. B. schräg aufgesetzt wird, so dass das eine Objekt an dem einen Schließbacken und das andere Objekt an dem anderen Schließbacken anliegt.

Der Erfindung liegt die Aufgabe zugrunde, ein mechanisches Drahtbindegerät anzugeben, bei dem sich das Risiko von Fehlbindungen verringern lässt.

Erfindungsgemäß wird die Aufgabe durch ein Drahtbindegerät nach Anspruch 1 gelöst.

Ein Drahtbindegerät zum Zusammenbinden von wenigstens zwei Objekten mit einem Draht weist ein Griffteil zum Halten des Drahtbindegeräts durch einen Bediener, eine Schiebeeinrichtung zum Vorwärtsbewegen eines im Ausgangszustand V-förmigen Drahtbügels relativ zu einer Drahtbügelhalterung, wenn das Griffteil durch den Bediener vorwärts bewegt wird, auf. Weiterhin ist eine Verdrilleinrichtung zum Verdrillen des Drahtbügels, wenn das Griffteil durch den Bediener rückwärts bewegt wird, sowie eine Führungseinrichtung zum Führen der beiden Schenkel des V-förmigen Drahtbügels jeweils entlang einer Kurve, um die Enden der Schenkel des Drahtbügels zusammen zu führen, so dass die Enden danach miteinander verhakt sind, vorgesehen. Die Führungseinrichtung weist zwei gabelartig zueinander feststehende, voneinander beabstandete Schließbacken auf, an denen jeweils ein Führungskanal zum Zuführen eines der Schenkel des Drahtbügels vorgesehen ist. Das Drahtbindegerät ist dadurch gekennzeichnet, dass im Bereich der Schließbacken eine Positioniereinrichtung vorgesehen ist, mit zwei einander gegenüberliegenden Führungsflächen, deren Abstand zueinander geringer ist als der Abstand der Schließbacken zueinander.

Das Drahtbindegerät beruht auf dem Bindegerät, wie es in der EP 0 232 392 B1 beschrieben ist. Zusätzlich ist erfindungsgemäß im Bereich der Schließbacken die Positioniereinrichtung vorgesehen. Die Positioniereinrichtung kann auch als Zentriervorrichtung oder Zielvorrichtung bezeichnet werden, da sie es ermöglicht, dass das Drahtbindegerät gegenüber den zu verbindenden Objekten besser zentriert (also positioniert) werden kann.

Die Positioniereinrichtung stellt sicher, dass die Objekte zwischen den Schließbacken präziser positioniert werden, weil die Objekte an den Führungsflächen der Positioniereinrichtung anliegen und nicht mehr in Berührung mit den weiter entfernt, also hinter den Führungsbacken liegenden Schließbacken oder Führungskanälen gelangen können. Die Führungsflächen gewährleisten somit einen gewissen Abstand der Objekte zu den Schließbacken und den dort vorgesehenen Führungskanälen, so dass die Schenkel des Drahtbügels in den Führungskanälen geführt und gebogen werden können, so dass sie schließlich die beiden zu verbindenden Objekte umschlingen und sich die Enden der Schenkel in der in der EP 0 232 392 B 1 beschriebenen Weise verhaken können.

Insbesondere kann somit die Maulbreite der Führungsflächen der Positioniereinrichtung geringer als die Maulbreite der Schließbacken sein.

Dabei kann es zweckmäßig sein, wenn die beiden gegenüberliegenden Führungsflächen im Wesentlichen parallel zueinander angeordnet sind.

Die beiden Führungsflächen der Positioniereinrichtung können gemeinsam mit den Führungskanälen der Führungseinrichtung im Wesentlichen in einer Ebene liegen, die sich senkrecht zu der Bewegungsrichtung des Griffteils erstreckt. Das bedeutet, dass die beiden miteinander zu verbindenden Objekte auf Höhe der Führungskanäle durch die beiden Führungsflächen geführt werden bzw. - umgekehrt - dass das Drahtbindegerät mit Hilfe der beiden Führungsflächen relativ zu den Objekten positioniert wird und auf Höhe der Führungskanäle sichergestellt ist, dass ein ausreichender, vordefinierter Mindestabstand zwischen den Führungskanälen (und damit den darin verschobenen Schenkeln des Drahtbügels) und den Objekten, z. B. dem Bewehrungseisen oder einem Heizschlauch, besteht.

Die Positioniereinrichtung kann in Form einer Gabel mit zwei Zinken ausgebildet sein wobei die Führungsflächen an den Innenseiten der beiden Zinken der Gabel angeordnet sind. In diesem Fall ähnelt die Gestaltung der Positioniereinrichtung derjenigen der Schließbacken der Führungseinrichtung.

An die beiden Führungsflächen der Positioniereinrichtung können sich zu einer offenen Seite der Positioniereinrichtung hin jeweils Einführungsflächen anschließen, um damit Objekte, die zwischen die gabelartigen Schließbacken platziert werden sollen, leichter zwischen die beiden Führungsflächen bewegen zu können. Die Einführungsflächen können angeschrägt oder auch als Radius ausgebildet sein, um so das Zielen beim Aufsetzen des Drahtbindegeräts auf die beiden zu verbindenden Objekte zu erleichtern. So können die Einführungsflächen z. B. als Einführungsschrägen ausgebildet sein.

Die Positioniereinrichtung kann formschlüssig an einer der Komponenten des restlichen Drahtbindegeräts befestigbar sein. Dies mach z. B. bei dem Bindegerät DF 16 der Firma Wacker Neuson SE Sinn, weil dieses im Bereich der Schließbacken eine so genannte Blechmaulkonstruktion aufweist. Durch die formschlüssige Verbindung zwischen dem Blechmaul und der Positioniereinrichtung ist eine ausreichende Stabilität auch im harten Baustellenbetrieb sichergestellt.

Die Positioniereinrichtung kann als Zusatzteil auf den Schließbacken befestigbar sein.

Die Positioniereinrichtung kann auch als Nachrüst- oder Ergänzungskit bei einem bereits vorhandenen Drahtbindegerät eingesetzt bzw. an diesem angebracht werden. Daher ist erfindungsgemäß auch eine eigenständige Positioniereinrichtung vorgesehen, zum Befestigen an einem Drahtbindegerät, wie es oben beschrieben wurde, mit einem Hauptkörper und mit zwei sich von dem Hauptkörper erstreckenden Zinken, die mit dem Hauptkörper zusammen ein gabelförmiges Element bilden. Auf den Innenseiten der Zinken kann jeweils eine Führungsfläche ausgebildet sein, wobei der Abstand der Führungsflächen zueinander ein vorgegebenes Maß nicht überschreitet.

Diese und weitere Vorteile und Merkmale der Erfindung werden nachfolgend anhand von Beispielen unter Zuhilfenahme der begleitenden Figuren näher erläutert. Es zeigen:
- **Fig. 1**: einen aus der EP 0 232 392 B 1 bekannten Drahtbügel in verschiedenen Ansichten;
- **Fig. 2**: ein Beispiel für das Verbinden von zwei Objekten mit dem Drahtbügel;
- **Fig. 3**: den Verbindungsvorgang mit einem schematisch dargestellten Drahtbindegerät;
- **Fig. 4**: das erfindungsgemäße Drahtbindegerät;
- **Fig. 5**: ein Maulabschnitt des Drahtbindegeräts in Seitenansicht;
- **Fig. 6**: das Drahtbindegerät in vergrößerter Darstellung;
- **Fig. 7**: den Maulabschnitt in Explosionsdarstellung.

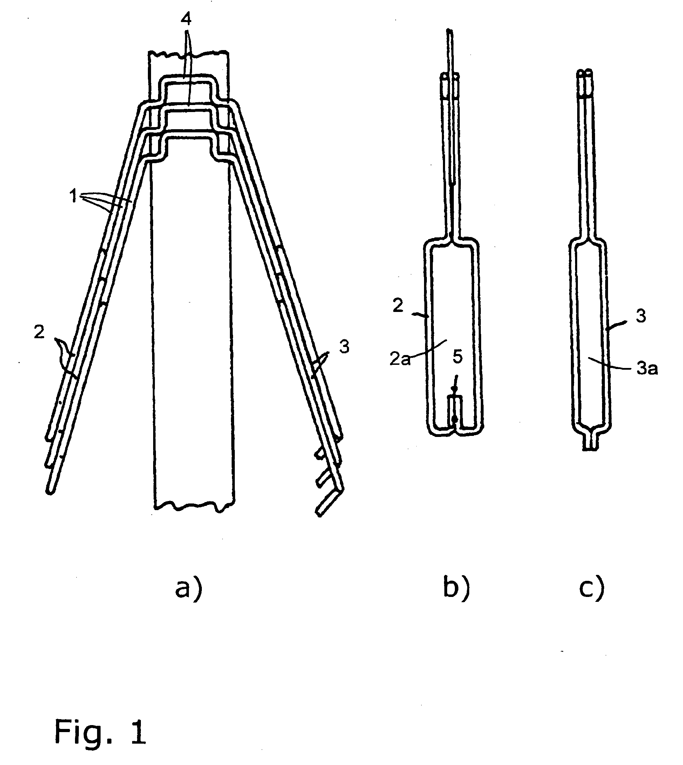

Fig. 1 zeigt den aus der EP 0 232 392 B1 bekannten V-förmigen Drahtbügel in Vorderansicht in Form eines kurzen Magazinstreifens von drei Drahtbügeln 1 (Fig. 1a) sowie die beiden Verschluss-Schenkel 2, 3 in den Figuren 1b und 1c. Die Schenkel 2, 3 sind in einem Übergang 4 miteinander verbunden. Der eine Verschluss-Schenkel 2 ist breiter als der andere Schenkel 3, wobei an seinem Ende ein Haken 5 ausgebildet ist. Die Verschluss-Schenkel 2, 3 weisen an ihren Enden jeweils ösenartige Öffnungen 2a, 3a auf, wobei die Öffnung 2a so breit ist, dass das Ende des schmalen Verschluss-Schenkels 3 durch die Öffnung 2a geführt werden kann.

Durch das Führen in dem Drahtbindegerät wird der schmalere Verschluss-Schenkel 3 durch die breitere Öffnung des Verschluss-Schenkels 2 geführt. Beim Rückbewegen des Verschluss-Schenkels 3 verhakt sich sein Ende an dem Haken 5 des Verschluss-Schenkels 2.

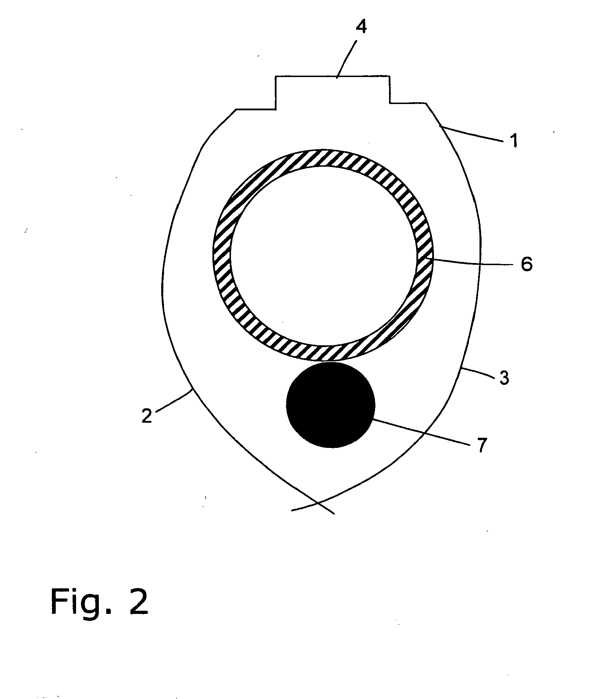

Figur 2 zeigt beispielhaft, wie der Drahtbügel 1 um zwei miteinander zu verbindende Objekte, nämlich hier einen Heizungsschlauch 6 und ein Bewehrungseisen 7 geführt wird. Die Enden der Schenkel 2, 3 haben sich bereits verhakt. Im Nachgang zu der Darstellung von Figur 2 greift ein nicht dargestellter Haken des Drahtbindegeräts am Übergang 4 an und verdreht diesen, so dass schließlich der gesamte Draht gespannt wird und den Heizungsschlauch 6 und das Bewehrungseisen 7 zusammenhält.

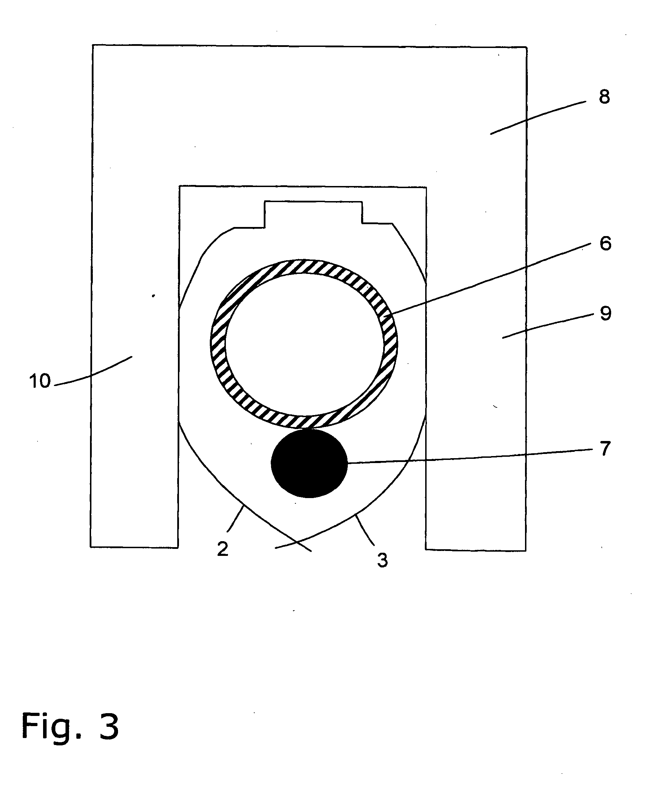

Fig. 3 zeigt einen Teil des Drahtbindegeräts in schematischer Darstellung, nämlich ein Maul 8, welches durch zwei Schließbacken 9 und 10 gebildet wird, die über die beiden zu verbindenden Objekte 6, 7 geführt werden.

Wie erkennbar, ist der Freiraum, also der Abstand zwischen dem Heizungsschlauch 6, der einen verhältnismäßig großen Durchmesser aufweist, und den Schließbacken 10 relativ knapp bemessen. Hier besteht die Gefahr, dass die Enden der beiden Verschluss-Schenkel 2, 3 nicht in der Weise miteinander verhakt werden können, wie dies in den Figuren 2 und 3 gezeigt wird. Dann tritt das oben bereits beschriebene Problem einer Fehlbindung auf. Dieses Risiko einer Fehlbindung erhöht sich insbesondere auch dadurch, dass das Maul 8 nicht - wie in Fig. 3 gezeigt - senkrecht über die beiden zu verbindenden Objekte 6, 7 geführt wird, sondern schräg angesetzt wird.

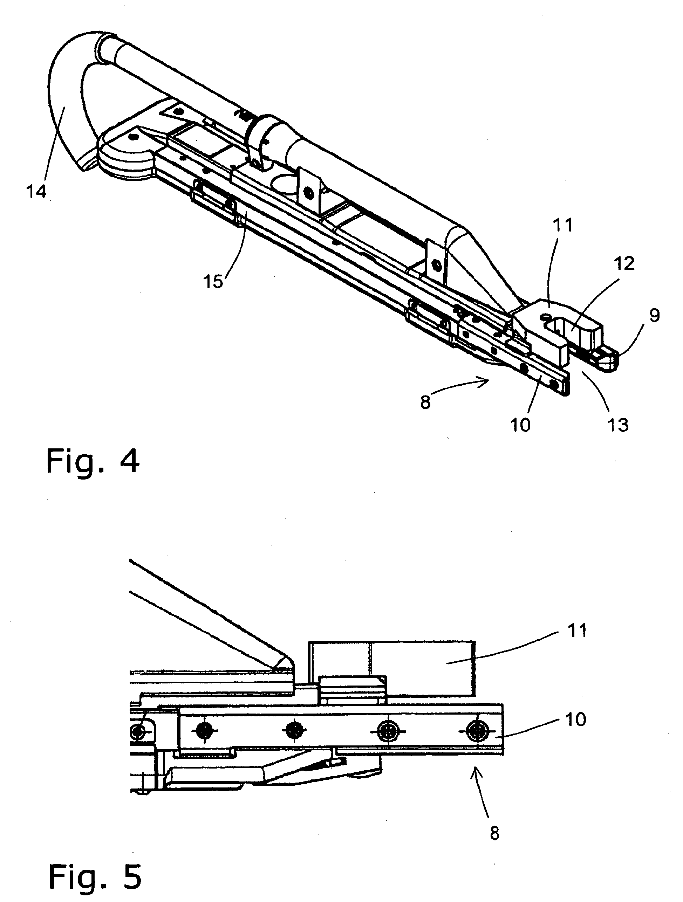

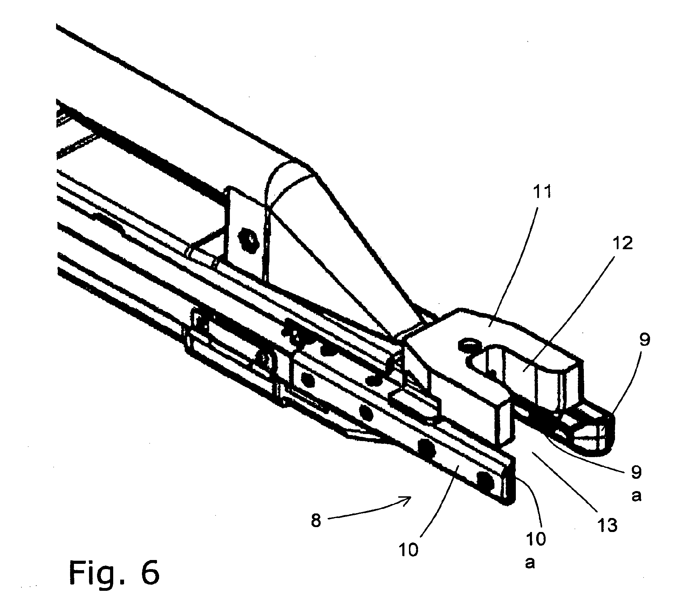

Fig. 4 zeigt ein erfindungsgemäßes Drahtbindegerät, bei dem auf dem Maul 8, d. h. auf den beiden Schließbacken 9, 10 eine Positioniereinrichtung 11 befestigt ist. Die Positioniereinrichtung 11 weist, wie in Fig. 4 gut erkennbar und in Fig. 6 in vergrößerter Darstellung gezeigt, eine geringere Maulbreite 12 als die Maulbreite 13 des Mauls 8 auf. Dadurch kann das Drahtbindegerät präziser und gezielter bzw. zentriert auf die beiden zu verbindenden Objekte 6, 7 aufgesetzt werden. Ein ausreichender Abstand zu den Schließbacken 9, 10 ist sichergestellt.

Auf den Innenseiten der Schließbacken 9, 10 sind Führungskanäle 9a, 10a ausgebildet, in denen die Schenkel 2, 3 geführt bewegt werden können, wie insbesondere in der EP 0 232 392 B 1 beschrieben.

Das Drahtbindegerät weist ein Griffteil 14 auf, an dem ein Bediener das Drahtbindegerät - ähnlich einem Regenschirm - halten und führen kann. In einem Magazinbereich 15 ist ein Streifen von V-förmigen Drahtbügeln 1 gelagert, von denen jeweils der vorderste Drahtbügel 1 abgezweigt und über das Maul 8 ausgegeben wird. Die genaue Funktionsweise des Drahtbindegeräts ist in der EP 0 232 392 B1 beschrieben, so dass sich eine Wiederholung an dieser Stelle erübrigt.

Im Betrieb setzt der Bediener das am Griffteil 14 geführte Drahtbindegerät auf die zu verbindenden Objekte 6, 7 auf. Dabei stellt die Positioniereinrichtung 11 sicher, dass das Maul 8 gegenüber den Objekten präzise positioniert ist. Anschließend drückt der Bediener das Griffteil 14 nach unten, wodurch im Inneren des Drahtbindegeräts ein V-förmiger Drahtbügel 1 von dem Magazinstreifen abgelöst und die Schenkel 2, 3 des Drahtbügels 1 entlang der Innenseiten der Schließbacken 9, 10 in den Führungskanälen 9a, 10a um die beiden Objekte 6, 7 herumgeführt und dabei auch verbogen werden. Beim Entlasten des Griffteils 14 bzw. beim Beginn des Rückbewegens des Griffteils 14 verhaken sich die Enden der Verschluss-Schenkel 2, 3, so dass der in Figur 2 gezeigte Zustand erreicht wird.

Durch anschließendes Zurückziehen des Griffteils 14 wird der Übergang 4 des Drahtbügels 1 verdrillt und der Bindevorgang ist abgeschlossen.

Fig. 5 zeigt in linker Seitenansicht das Maul 8 mit der zusätzlich darauf montierten Positioniereinrichtung 11.

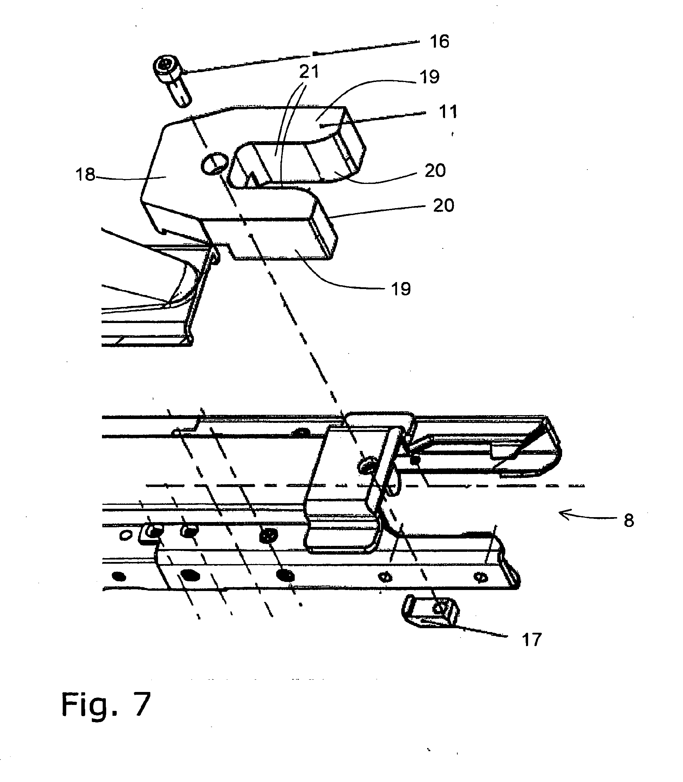

Zur Verdeutlichung ist in Fig. 7 die Positioniereinrichtung 11 als Zusatzvorrichtung gezeigt, die mit Hilfe einer Schraube 16 und einem Auflaufklotz 17 über dem Maul 8 des Drahtbindegeräts festgeschraubt werden kann. Auf diese Weise ist eine robuste Befestigung der Positioniereinrichtung 11 auf dem als Blechkonstruktion ausgeführten Maul sichergestellt. Schläge, die die Positioniereinrichtung 11 im Betrieb unweigerlich erleiden muss, werden so gefahrlos aufgenommen und ohne Gefahr des Abreißens der Positioniereinrichtung 11 über das restliche Gerät getragen.

Wie Fig. 7 zeigt, weist die Positioniereinrichtung 11 einen z. B. aus Aluminium hergestellten Hauptkörper 18 und zwei sich davon seitlich erstreckende Zinken 19 auf. Die Enden der Zinken 19 können gerundete oder schräg gestellte Einführungsflächen 20 aufweisen, um das Aufsetzen des Geräts zu erleichtern. An die Einführungsflächen 20 schließen sich die eigentlichen Führungsflächen 21 an, die einander gegenüberliegen und im Wesentlichen parallel zueinander sind. Die Führungsflächen 21 bestimmen die Maulbreite 12 der Positioniereinrichtung 11.

Die Positioniereinrichtung 11 kann von vornherein bei einem Neugerät vorgesehen oder aber auch als Nachrüstlösung nachträglich aufgesetzt werden.

## Patentansprüche

1. Drahtbindegerät zum Zusammenbinden von wenigstens zwei Objekten (6, 7) mit einem Draht, mit
- einem Griffteil (14) zum Halten des Drahtbindegeräts durch einen Bediener;
- einer Schiebeeinrichtung zum Vorwärtsbewegen eines im Ausgangszustand V-förmigen Drahtbügels (1) relativ zu einer Drahtbügelhalterung, wenn das Griffteil (14) durch den Bediener vorwärts bewegt wird;
- einer Verdrilleinrichtung zum Verdrillen des Drahtbügels (1), wenn das Griffteil (14) durch den Bediener rückwärts bewegt wird; und mit
- einer Führungseinrichtung zum Führen der beiden Schenkel (2, 3) des V-förmigen Drahtbügels (1) jeweils entlang einer Kurve, um die Enden der Schenkel (2, 3) des Drahtbügels (1) zusammenzuführen, so dass die Enden danach miteinander verhakbar sind;
wobei
- die Führungseinrichtung zwei gabelartig zueinander fest stehende, voneinander beabstandete Schließbacken (9, 10) aufweist, an denen jeweils ein Führungskanal (9a, 10a) zum Führen eines der Schenkel (2, 3) des Drahtbügels (1) vorgesehen ist;
**dadurch gekennzeichnet, dass**
- im Bereich der Schließbacken (9, 10) eine Positioniereinrichtung (11) vorgesehen ist, mit zwei einander gegenüberliegenden Führungsflächen (21), deren Abstand zueinander geringer ist als der Abstand der Schließbacken (9, 10) zueinander.

2. Drahtbindegerät nach Anspruch 1, **dadurch gekennzeichnet, dass** die Maulbreite (12) der Führungsflächen (21) der Positioniereinrichtung (11) geringer ist als die Maulbreite (13) der Schließbacken (9, 10).

3. Drahtbindegerät nach einem der Ansprüche 1 oder 2, **dadurch gekennzeichnet, dass** die beiden Führungsflächen (21) im Wesentlichen parallel zueinander angeordnet sind.

4. Drahtbindegerät nach einem der vorherigen Ansprüche, **dadurch gekennzeichnet, dass** die beiden Führungsflächen (21) der Positioniereinrichtung (11) gemeinsam mit den Führungskanälen (9a, 10a) der Führungseinrichtung im Wesentlichen in einer Ebene liegen, die sich senkrecht zu der Bewegungsrichtung des Griffteils (14) erstreckt.

5. Drahtbindegerät nach einem der vorherigen Ansprüche, **dadurch gekennzeichnet, dass**
- die Positioniereinrichtung (11) in Form einer Gabel mit zwei Zinken (19) ausgebildet ist; und dass
- die Führungsflächen (21) an den Innenseiten der beiden Zinken (19) der Gabel angeordnet sind.

6. Drahtbindegerät nach einem der vorherigen Ansprüche, **dadurch gekennzeichnet, dass** sich an die beiden Führungsflächen (21) der Positioniereinrichtung (11) zu einer offenen Seite der Positioniereinrichtung hin jeweils Einführungsflächen (20) anschließen.

7. Drahtbindegerät nach einem der vorherigen Ansprüche, **dadurch gekennzeichnet, dass** die Positioniereinrichtung (11) formschlüssig an einer der Komponenten des restlichen Drahtbindegeräts befestigbar ist.

8. Drahtbindegerät nach einem der vorherigen Ansprüche, **dadurch gekennzeichnet, dass** die Positioniereinrichtung (11) als Zusatzteil auf den Schließbacken (9, 10) befestigbar ist.

## Claims

1. Wire-binding device for binding together at least two objects (6, 7) with a wire, comprising:
- a handle part (14) by means of which an operator can hold the wire-binding device;
- a slide device for the forward movement of a wire clip (1), which is V-shaped in its initial state, relative to a wire clip mount when the handle part (14) is moved forwards by the operator;
- a twisting device for twisting the wire clip (1) when the handle part (14) is moved backwards by the operator; and comprising
- a guide device for guiding each of the two limbs (2, 3) of the V-shaped wire clip (1) along a curve in order to bring together the ends of the limbs (2, 3) of the wire clip (1) so that the ends can subsequently be hooked together;
wherein
- the guide device has two closing jaws (9, 10) which are stationary relative to one another and are situated at a distance from one another in the manner of a fork, a guide channel (9a, 10a) for guiding one of the limbs (2, 3) of the wire clip (1) being provided on each of said jaws;
**characterised in that**
- in the region of the closing jaws (9, 10) there is provided a positioning device (11) having two guide surfaces (21) situated opposite one another, the spacing of which with respect to each other is smaller than the spacing of the closing jaws (9, 10) with respect to each other.

2. Wire-binding device as claimed in claim 1, **characterised in that** the mouth width (12) of the guide surfaces (21) of the positioning device (11) is smaller than the mouth width (13) of the closing jaws (9, 10).

3. Wire-binding device as claimed in any one of claims 1 or 2, **characterised in that** the two guide surfaces (21) are arranged substantially in parallel with each other.

4. Wire-binding device as claimed in any one of the preceding claims, **characterised in that** the two guide surfaces (21) of the positioning device (11), together with the guide channels (9a, 10a) of the guide device, substantially lie in one plane which extends perpendicular to the direction of movement of the handle part (14).

5. Wire-binding device as claimed in any one of the preceding claims, **characterised in that**:
- the positioning device (11) is designed in the form of a fork having two prongs (19); and **in that**
- the guide surfaces (21) are arranged on the inner sides of the two prongs (19) of the fork.

6. Wire-binding device as claimed in any one of the preceding claims, **characterised in that** insertion surfaces (20) are connected to each of the two guide surfaces (21) of the positioning device (11), oriented towards an open side of the positioning device.

7. Wire-binding device as claimed in any one of the preceding claims, **characterised in that** the positioning device (11) can be attached in a positive-locking manner to one of the components of the rest of the wire-binding device.

8. Wire-binding device as claimed in any one of the preceding claims, **characterised in that** the positioning device (11) can be attached on the closing jaws (9, 10) as an add-on part.

## Revendications

1. Dispositif de ligature par fil métallique, permettant de relier au moins deux objets (6, 7) au moyen d'un fil métallique, comportant
- une poignée (14) pour qu'un utilisateur puisse maintenir le dispositif de ligature ;
- un dispositif de coulissement pour faire avancer un étrier en fil métallique (1), en forme de V à l'état initial, par rapport à un support d'étrier lorsque la poignée (14) est déplacée vers l'avant par l'utilisateur ;
- un dispositif de torsion pour torsader l'étrier (1) lorsque la poignée (14) est déplacée vers l'arrière par l'utilisateur ; et comportant
- un dispositif de guidage pour guider chacune des deux branches (2, 3) de l'étrier (1) en forme de V le long d'une courbe pour réunir les extrémités des branches (2, 3) de l'étrier (1), de telle sorte que lesdites extrémités peuvent être accrochées ensuite l'une à l'autre ;
- ledit dispositif de guidage comportant deux mâchoires de fermeture (9, 10) écartées l'une de l'autre et fixes l'une par rapport à l'autre à la manière d'une fourche, sur chacune desquelles est prévu un canal de guidage (9a, 10a) pour guider une des branches (2, 3) de l'étrier (1) ;
**caractérisé en ce que**
- dans la zone des mâchoires de fermeture (9, 10) est prévu un dispositif de positionnement (11), comportant deux surfaces de guidage (21) opposées l'une à l'autre, qui sont écartées l'une de l'autre selon une distance inférieure à la distance entre les mâchoires de fermeture (9, 10).

2. Dispositif de ligature par fil métallique selon la revendication 1, **caractérisé en ce que** la largeur d'ouverture (12) entre les surfaces de guidage (21) du dispositif de positionnement (11) est inférieure à la largeur d'ouverture (13) entre les mâchoires de fermeture (9, 10).

3. Dispositif de ligature par fil métallique selon la revendication 1 ou 2, **caractérisé en ce que** les deux surfaces de guidage (21) sont sensiblement parallèles entre elles.

4. Dispositif de ligature par fil métallique selon l'une quelconque des revendications précédentes, **caractérisé en ce que** les deux surfaces de guidage (21) du dispositif de positionnement (11) sont disposées conjointement avec les canaux de guidage (9a, 10a) du dispositif de guidage sensiblement dans un même plan, qui est perpendiculaire à la direction de déplacement de la poignée (14).

5. Dispositif de ligature par fil métallique selon l'une quelconque des revendications précédentes, **caractérisé en ce que**
- le dispositif de positionnement (11) est réalisé sous la forme d'une fourche avec deux dents (19) ; et **en ce que**
- les surfaces de guidage (21) sont disposées sur les faces internes des deux dents (19) de la fourche.

6. Dispositif de ligature par fil métallique selon l'une quelconque des revendications précédentes, **caractérisé en ce que** les deux surfaces de guidage (21) du dispositif de positionnement (11) sont prolongées chacune vers un côté ouvert du dispositif de positionnement par des surfaces d'introduction (20).

7. Dispositif de ligature par fil métallique selon l'une quelconque des revendications précédentes, **caractérisé en ce que** le dispositif de positionnement (11) peut être fixé par conjugaison de forme à l'un des composants du reste du dispositif de ligature.

8. Dispositif de ligature par fil métallique selon l'une quelconque des revendications précédentes, **caractérisé en ce que** le dispositif de positionnement (11) peut être fixé en tant que pièce supplémentaire sur les mâchoires de fermeture (9, 10).
